# DEMANDE DE BREVET EUROPEEN

(11) **EP 4 075 728 A1**
(43) Date de publication de la demande: **19.10.2022**
(21) Numéro de dépôt: 22168275.0
(22) Date de dépôt: 14.04.2022
(51) Int. Cl.: H04L 9/40, G06F 21/34, H04L 9/00, G06F 21/62

(54) **SYSTEME ET PROCEDE DE TRAITEMENT DE DONNEES PERSONNELLES**

(30) Priorité: 15.04.2021 FR 2103918
(71) Demandeur: Idemia Identity & Security France, 92400 Courbevoie (FR)
(72) Inventeur: CHABANNE, Hervé, 92400 COURBEVOIE (FR); FONDEUR, Jean-Christophe, 92400 COURBEVOIE (FR); COURQUIN, Yannick, 92400 COURBEVOIE (FR)
(74) Mandataire: Regimbeau

(57) **Abrégé**

L'invention propose un système de traitement de données personnelles (1) comprenant un module de stockage de données (12) stockant une base de données personnelles de référence chiffrées, caractérisé en ce qu'il comprend en outre un module matériel de sécurité (10) stockant une clé privée de déchiffrement desdites données personnelles de référence et configuré pour mettre en œuvre un filtrage de données interdisant toute sortie de données personnelles

L'invention propose en outre un procédé de traitement de données personnelles.

## Description

### DOMAINE DE L'INVENTION

L'invention concerne un procédé de traitement de données personnelles, pour la comparaison entre une donnée personnelle candidate et au moins une donnée personnelle de référence.

### ETAT DE LA TECHNIQUE

On connaît déjà des schémas d'identification ou d'authentification dans lesquels un utilisateur présente à une unité de traitement digne de confiance, par exemple à une unité appartenant à une douane, un aéroport, etc., une donnée biométrique fraîchement acquise sur l'utilisateur que l'unité confronte à une ou plusieurs donnée(s) biométrique(s) de référence enregistrée(s) dans une base de données à laquelle elle a accès.

Cette base de données regroupe les données biométriques de référence des individus autorisés (tels que les passagers d'un vol avant l'embarquement).

Une telle solution apporte satisfaction, mais pose le problème de la confidentialité de la base de données biométriques de référence pour garantir la vie privée des usagers.

Pour éviter toute manipulation en clair des données biométriques, on peut utiliser un chiffrement homomorphe et réaliser les traitements sur les données biométriques (typiquement calculs de distance) dans le domaine chiffré. Un système cryptographique homomorphe permet en effet d'effectuer certaines opérations mathématiques sur des données préalablement chiffrés au lieu des données en clair. Ainsi, pour un calcul donné, il devient possible de chiffrer les données, faire certains calculs associés audit calcul donné sur les données chiffrés, et les déchiffrer, en obtenant le même résultat que si l'on avait fait ledit calcul donné directement sur les données en clair.

Ainsi le dépositaire de la clé privée du système cryptographique homomorphe peut alors obtenir le résultat souhaité de l'identification ou authentification d'un individu.

Cependant, même si ce dépositaire est une entité de confiance, il a la capacité avec cette clé de déchiffrer les données biométriques, ce qui reste problématique.

Il serait ainsi souhaitable de disposer d'une solution simple, fiable, sécurisée, et totalement respectueuse de la vie privée, d'identification/authentification d'un individu.

### PRESENTATION DE L'INVENTION

Selon un premier aspect, l'invention concerne un système de traitement de données personnelles comprenant un module de stockage de données stockant une base de données personnelles de référence chiffrées de manière homomorphe, ledit système étant caractérisé en ce qu'il comprend en outre un module matériel de sécurité stockant une clé privée de déchiffrement desdites données personnelles de référence et configuré pour mettre en oeuvre un filtrage de données interdisant toute sortie de données personnelles.

Selon des caractéristiques avantageuses et non limitatives :
Ledit filtrage est mis en œuvre sur les données d'entrée dudit module matériel de sécurité, et bloque toute donnée personnelle.

Ledit module matériel de sécurité est configuré pour déchiffrer les données d'entrée dudit module matériel de sécurité en utilisant ladite clé privée de déchiffrement, puis mettre en œuvre le filtrage sur les données d'entrée déchiffrées.

Ledit filtrage est mis en œuvre sur la base d'au moins un intervalle de valeurs de données d'entrée autorisées ou interdites, d'au moins un intervalle de tailles de données d'entrée autorisées ou interdites, et/ou d'au moins un format de données d'entrée autorisé ou interdit.

Ledit module matériel de sécurité est en outre configuré pour retourner au moins une donnée représentative du résultat d'une comparaison entre au moins une donnée personnelle de référence de ladite base et une donnée personnelle candidate.

Lesdites données personnelles sont des données biométriques, le système comprenant en outre des moyens d'acquisition biométrique pour l'obtention de ladite donnée biométrique candidate.

Le procédé comprend en outre un module de traitement de données configuré pour mettre en œuvre dans le domaine chiffré ladite comparaison entre l'au moins une donnée personnelle de référence et la donnée personnelle candidate, ledit module matériel de sécurité étant configuré pour déchiffrer le résultat de ladite comparaison en utilisant ladite clé privée de déchiffrement.

Le résultat de ladite comparaison entre l'au moins une donnée personnelle de référence et la donnée personnelle candidate est un score de distance entre l'au moins une donnée personnelle de référence et la donnée personnelle candidate, en particulier leur produit scalaire ; la génération de ladite donnée représentative du résultat de la comparaison entre l'au moins une donnée personnelle de référence et une donnée personnelle candidate comprenant la normalisation et/ou le seuillage dudit score de distance.

Ladite donnée personnelle candidate est chiffrée de la même manière homomorphe que les données personnelles de référence.

Ledit module matériel de sécurité est en outre configuré pour déclencher une alarme si ledit filtrage bloque une donnée et/ou si une donnée d'entrée est mal chiffrée.

Ledit module matériel de sécurité est une enclave d'un module de traitement de données du système.

Selon un deuxième aspect, l'invention concerne un procédé de traitement de données personnelles mis en œuvre par un système comprenant un module de traitement de données et un module de stockage de données stockant une base de données personnelles de référence chiffrées de manière homomorphe ; caractérisé en ce que ledit système comprend en outre un module matériel de sécurité stockant une clé privée de déchiffrement desdites données personnelles de référence et configuré pour mettre en œuvre un filtrage de données interdisant toute sortie de données personnelles ; et
caractérisé en ce que qu'il comprend des étapes de :
(a) Comparaison dans le domaine chiffré par ledit module de traitement de données d'une donnée personnelle candidate avec au moins une donnée personnelle de référence ;
(b) Déchiffrement du résultat de ladite comparaison par ledit module matériel de sécurité en utilisant ladite clé privée de déchiffrement.

Selon des caractéristiques avantageuses et non limitatives :
Lesdites données personnelles sont des données biométriques, le procédé comprenant une étape (a0) d'obtention de la donnée biométrique candidate à partir d'un trait biométrique en utilisant des moyens d'acquisition biométrique du système.

Le procédé comprend en outre une étape (c) de mise en œuvre d'un contrôle d'accès en fonction d'une donnée représentative du résultat de ladite comparaison générée par ledit module matériel de sécurité en fonction dudit résultat de la comparaison entre la donnée personnelle candidate et l'au moins une donnée personnelle de référence.

Selon une troisième et un quatrième aspect, l'invention concerne un produit programme d'ordinateur comprenant des instructions de code pour l'exécution d'un procédé selon le deuxième aspect de traitement de données personnelles ; et un moyen de stockage lisible par un équipement informatique sur lequel un produit programme d'ordinateur comprend des instructions de code pour l'exécution d'un procédé selon le deuxième aspect de traitement de données personnelles.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- La figure 1 représente schématiquement un mode de réalisation préféré d'un système selon l'invention ;
- La figure 2 illustre les étapes d'un mode de réalisation d'un procédé selon l'invention.

### DESCRIPTION DETAILLEE

### Architecture

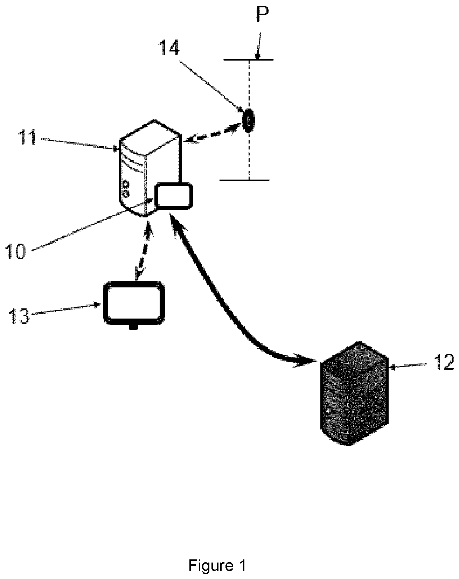

En référence à la figure 1, on a représenté schématiquement un système de traitement de données personnelles pour l'authentification/identification d'individus.

Ce système 1 est un équipement détenu et contrôlé par une entité auprès de qui l'authentification/identification doit être effectuée, par exemple une entité gouvernementale, douanière, une société, etc. Dans la suite de la présente description on prendra l'exemple d'un aéroport, le système 1 visant typiquement à contrôler l'accès des passagers d'un vol avant leur embarquement.

Par donnée personnelle, on entend en particulier une donnée biométrique (et on prendra cet exemple dans la suite de la présente description), mais on comprendra qu'il peut s'agir de toute donnée propre à un individu sur la base desquelles on peut authentifier un utilisateur, comme une donnée alphanumérique, une signature, etc.

De manière classique le système 1 comporte un module de traitement de données 11, i.e. un calculateur tel que par exemple un processeur, un microprocesseur, un contrôleur, un microcontrôleur, un FPGA etc. Ce calculateur est adapté pour exécuter des instructions de code pour mettre en œuvre le cas échéant une partie du traitement de données qui sera présenté ci-après.

Le système 1 comprend également un module de stockage de données 12 (une mémoire, par exemple flash) et avantageusement une interface utilisateur 13 (typiquement un écran), et des moyens d'acquisition biométrique 14 (voir plus loin).

En outre, le système 1 se distingue en ce qu'il comprend un module matériel de sécurité 10, en anglais « Hardware Security Module » ou simplement HSM (en français on trouve également le nom de « Boîte noire transactionnelle » ou BNT). Il s'agit d'un appareil considéré comme inviolable offrant des fonctions cryptographiques, qui peut être par exemple une carte électronique enfichable PCI sur un ordinateur ou un boîtier externe SCSI/IP, mais également une enclave sécurisée du module de traitement de données 11.

Le système 1 peut être disposé localement (par exemple dans l'aéroport), mais peut être séparé en un voire plusieurs serveurs distants de type « cloud » hébergeant les composants électroniques (modules 10, 11, 12) connectés aux moyens d'acquisition biométrique 14 qui eux doivent nécessairement rester sur site (au niveau de la gâte pour du contrôle à l'embarquement). Dans l'exemple de la figure 1, le module de stockage 12 est distant.

Dans le mode de réalisation préféré biométrique, le système 1 est capable de générer une donnée biométrique dite candidate à partir d'un trait biométrique d'un individu. Le trait biométrique peut par exemple être la forme du visage, une ou plusieurs empreintes, ou un ou plusieurs iris de l'individu. L'extraction de la donnée biométrique est mise en œuvre par un traitement de l'image du trait biométrique qui dépend de la nature du trait biométrique. Des traitements d'images variés pour extraire des données biométriques sont connus de l'Homme du Métier. A titre d'exemple non limitatif, l'extraction de la donnée biométrique peut comprendre une extraction d'un template représentatif (en particulier par un réseau de neurones), de points particuliers, ou d'une forme du visage dans le cas où l'image est une image du visage de l'individu.

Les moyens d'acquisition biométrique 14 consistent à ce titre typiquement en un capteur d'image, par exemple un appareil photographique numérique ou une caméra numérique, adapté pour acquérir au moins une image d'un trait biométrique d'un individu, voir plus loin.

De manière générale, on aura toujours une donnée personnelle candidate et au moins une donnée personnelle de référence à comparer, si on utilise des données personnelles alphanumériques la donnée candidate peut-être tout simplement saisie sur les moyens 13 ou par exemple obtenue par lecture optique à partir d'une image.

Le module de stockage de données 12 stocke une base de données personnelles de référence, c'est-à-dire au moins une donnée personnelle « attendue » d'un individu autorisé, par exemple les passagers enregistrés pour le vol. Chaque donnée personnelle de référence est avantageusement une donnée enregistrée dans un document d'identité de l'individu. Par exemple, la donnée personnelle peut être la donnée biométrique obtenue à partir d'une image du visage figurant sur un document d'identité (par exemple un passeport), ou encore d'une image du visage, d'au moins une empreinte, ou d'au moins un iris de l'individu enregistré dans une puce radiofréquence contenue dans le document.

Chaque donnée personnelle de référence est stockée chiffrée, préférentiellement au moyen d'un cryptosystème asymétrique, en particulier homomorphe (on reviendra là-dessus plus loin). On a une paire d'une clé privée de déchiffrement stockée (préférentiellement uniquement) dans ledit module matériel de sécurité 10, et d'une clé publique de chiffrement. On pourra utiliser n'importe quel cryptosystème présentant les propriétés demandées, par exemple RSA qui est partiellement homomorphe, Boneh-Goh-Nissim presque complètement homomorphe, ou Brakerski-Gentry-Vaikuntanathan (BGV), Cheon-Kim-Kim-Son (CKKS), Fast Fully Homomorphic Encryption Over the Torus (TFHE) ou encore Brakerski/Fan-Vercauteren (BFV) qui sont totalement homomorphes (FHE, Fully Homomorphic Encryption).

On suppose que la base de données personnelles de référence est constituée en avance. Par exemple, les passagers peuvent avoir présenté en amont leur document d'identité.

Dans un mode de réalisation, le système 1 met en œuvre une authentification de l'individu, c'est-à-dire compare la donnée personnelle dite candidate (fraichement acquise sur l'individu dans le cas d'une donnée biométrique, ou sinon simplement demandée à l'individu si c'est une donnée alphanumérique par exemple), à une seule personnelle de référence, censée provenir du même individu, afin de vérifier que l'individu à partir duquel ont été obtenues les deux données est bien le même.

Dans un autre mode de réalisation, le système 1 met en œuvre une identification de l'individu, c'est-à-dire compare la donnée personnelle candidate à toutes les données personnelles référence de ladite base, afin de déterminer l'identité de l'individu.

Le système 1 peut enfin comprendre des moyens de contrôle d'accès (par exemple une porte automatique P dans la figure 1) commandés en fonction du résultat de l'authentification/identification : si un utilisateur autorisé est reconnu, l'accès est autorisé. Lesdits moyens d'acquisition biométrique 14 peuvent être directement montés sur lesdits moyens de contrôle d'accès.

### Module matériel de sécurité

La présente invention propose d'utiliser astucieusement le module matériel de sécurité 10 pour contrôler de manière totale l'accès aux données personnelles.

L'idée est de configurer ce module matériel de sécurité 10 pour mettre en œuvre un filtrage de données interdisant toute sortie de données personnelles, voire même toute entrée de données personnelles chiffrées, et de façon générale toute manipulation de données personnelles une fois déchiffrées.

On comprendra que par « interdire toute entrée de données personnelles », on entend en pratique interdire l'acceptation de telles données personnelles dans le HSM 10, i.e. les bloquer. Naturellement, une donnée doit pouvoir être lue par le HSM 10 pour pouvoir être filtrée, mais on peut le configurer pour qu'il ne s'autorise de continuer à les traiter que si le filtrage est concluant (i.e. qu'il ne s'agit pas de données personnelles). En d'autres termes, une donnée d'entrée bloquée entrera de manière minimale dans le HSM 10, avant d'être effacée, voir plus loin.

En effet, seul ce dernier a la clé de déchiffrement : le module de stockage 12 est en soi accessible, mais les données personnelles de référence y sont stockées de manière chiffrée.

Le module matériel de sécurité 10 a la capacité de les déchiffrer, mais la règle de filtrage l'empêche de les communiquer vers l'extérieur, voire même de les accepter, de sorte que leur confidentialité est garantie.

Plus précisément, un tiers qui aurait accès frauduleusement au système 1 peut envoyer toutes les commandes qu'il veut au module matériel de sécurité 10 mais le filtrage l'empêchera toujours de produire ces données en clair. En outre le caractère inviolable des HSM fait que la règle de filtrage n'est pas désactivable sans détruire le module matériel de sécurité 10 et perdre la clé de déchiffrement et donc tout espoir d'accès aux données de référence.

Le filtrage n'empêche pas par contre toute entrée/sortie de données, de sorte qu'on peut par contre obtenir du module matériel de sécurité 10 le résultat d'une opération sur les données personnelles sans violer la confidentialité de celles-ci, par exemple un booléen d'appartenance ou non à la base ou un score de confiance.

Plus précisément, ledit module matériel de sécurité 10 peut être en outre configuré pour retourner au moins une donnée représentative du résultat d'une comparaison entre au moins une donnée personnelle de référence et une donnée personnelle candidate. Si l'on souhaite identifier l'individu on peut réaliser une comparaison de chaque donnée personnelle de référence de la base et la donnée personnelle candidate (i.e. autant de comparaisons avec la donnée candidate que de données de référence). On verra plus loin comment cela fonctionne, et on ne confondra pas la notion de « comparaison entre deux données personnelles » (qui correspond en pratique à un calcul d'un score de distance) et la notion de « comparaison d'un score avec un seuil » (i.e. de seuillage).

Comme expliqué, le filtrage est préférentiellement un filtrage des données d'entrée (inputs) dudit module matériel de sécurité 10 interdisant toute entrée de données personnelles chiffrées, même s'il pourrait être également un filtrage sur les données de sortie (outputs). Le filtrage sur les données d'entrée est le plus sécurisé car si des données personnelles étaient malgré tout envoyées au module 10 il prévient toute manipulation ultérieure de ces données au sein du module 10 et donc toute fuite potentielle.

Pour cela, ledit module matériel de sécurité 10 est configuré pour déchiffrer les données d'entrée en utilisant ladite clé privée de déchiffrement, puis mettre en œuvre (directement) le filtrage sur les données d'entrée déchiffrées. En d'autres termes, le module 10 s'assure tout de suite qu'il a le droit de travailler sur les données fournies. S'il constate que les données déchiffrées sont des données personnelles, il les bloque (toute trace de ces données est supprimée du HSM 10), et sinon il autorise un traitement ultérieur. En d'autres termes, l'HSM 10 est configuré pour mettre en œuvre systématiquement sur chaque donnée d'entrée la séquence suivante :
- Déchiffrer la donnée d'entrée ;
- Déterminer si la donnée d'entrée déchiffrée est une donnée personnelle ou non ;
- Si la donnée d'entrée déchiffrée est une donnée personnelle, la bloquer, et optionnellement déclencher une alarme (à noter que l'alarme peut aussi être déclenchée si la donnée d'entrée est « mal chiffrée », c'est-à-dire si l'HSM 10 ne parvient pas à mettre en œuvre le déchiffrement et donc à obtenir une donnée d'entrée déchiffrée).

Dans le cas d'un filtrage sur la sortie, celui-ci est mis en œuvre à chaque fois que le HSM 10 doit exécuter une commande de sortie à l'extérieur d'une donnée. En d'autres termes, l'HSM 10 est configuré pour mettre en œuvre systématiquement sur chaque donnée pour laquelle sa sortie est requise la séquence suivante :
- Déterminer si la donnée dont la sortie est requise est une donnée personnelle ou non ;
- Si (et seulement si) la donnée dont la sortie est requise n'est pas une donnée personnelle, mettre en œuvre sa sortie de l'HSM. Sinon, la bloquer, et optionnellement déclencher une alarme.

Ledit filtrage est préférentiellement mis en œuvre sur la base d'au moins un intervalle de valeurs de données d'entrée autorisées, d'au moins un intervalle de tailles de données d'entrée autorisées, et/ou d'au moins un format de données d'entrée autorisée. Inversement, il peut s'agir d'au moins un intervalle de valeurs de données d'entrée interdites, d'au moins un intervalle de tailles de données d'entrée interdites, et/ou d'au moins un format de données d'entrée interdit (on comprendra qu'il y a équivalence entre les deux représentations). A noter qu'on peut voir les mêmes règles sur les données de sortie si le filtrage est à ce niveau.

Par exemple :
- Type « booléen » ;
- Intervalles {0} et {1} pour un résultat booléen ;
- Type « entier » et intervalle [0 ;100] pour un score ;
- Etc.

Si le filtrage conclut que les données d'entrées sont autorisées, ou du moins pas interdites, le module matériel de sécurité 10 peut mettre en œuvre les traitements prévus des données d'entrée.

### Donnée personnelle candidate

Il est important de comprendre que si l'enrôlement, c'est-à-dire la constitution de la base de données personnelles de référence, peut être mise en œuvre bien avant la comparaison personnelle, dans le cas biométrique la donnée candidate doit être obtenue au pire quelques minutes avant, pour garantir la « fraicheur » de cette donnée candidate.

Comme expliqué, le système 1 comprend en outre des moyens d'acquisition biométrique 14 pour l'obtention de ladite donnée biométrique candidate. Généralement, la donnée biométrique candidate est générée par le module de traitement de données 11 à partir d'un trait biométrique fourni par les moyens d'acquisition biométrique 14, mais les moyens d'acquisition biométrique 14 peuvent comprendre leurs propres moyens de traitement et par exemple prendre la forme d'un dispositif automatique fourni par les autorités de contrôle (dans l'aéroport) pour extraire la donnée biométrique candidate. Un tel dispositif peut le cas échéant chiffrer à la volée la donnée biométrique candidate, avantageusement avec la clé publique de chiffrement correspondant à la clé privée de déchiffrement du module matériel de sécurité 10. Ainsi, les données biométrique candidates sont elles aussi complètement protégées.

De façon préférée les moyens d'acquisition biométrique 14 sont capable de détecter le vivant, de sorte à s'assurer que la donnée biométrique candidate est issue d'un trait « réel ».

Dans le cas où les moyens 14 et le reste du système sont distants, la communication entre les deux peut être elle-même chiffrée.

Dans tous les cas, la comparaison entre la donnée personnelle candidate et une donnée personnelle de référence peut être mise en œuvre de n'importe quelle façon connue, en particulier la donnée personnelle candidate et la donnée personnelle de référence coïncident si leur distance selon une fonction de comparaison donnée est inférieure à un seuil prédéterminé.

Ainsi, la mise en œuvre de la comparaison comprend le calcul d'une distance entre les données, dont la définition varie en fonction de la nature des données personnelles considérées. Le calcul de la distance comprend le calcul d'un polynôme entre les composantes des données biométriques, et avantageusement le calcul d'un produit scalaire.

Par exemple, dans le cas où il s'agit de données biométriques obtenues à partir d'images d'iris, une distance classiquement utilisée pour comparer deux données est la distance de Hamming. Dans le cas où il s'agit de données biométriques obtenues à partir d'images du visage d'individu, il est courant d'utiliser la distance euclidienne.

Ce type de comparaison est connu de l'Homme du Métier et ne sera pas décrit plus en détails ci-avant.

L'individu est authentifié si la comparaison révèle un taux de similarité entre la donnée candidate et la donnée de référence « cible » excédant un certain seuil, dont la définition dépend de la distance calculée. Dans un tel mode de réalisation, le module matériel de sécurité 10 peut renvoyer le booléen selon si le seuil est dépassé, ou bien directement le taux de similarité, en particulier s'il est supérieur au seuil. Le taux de similarité peut être tout score calculé à partir de ladite distance, par exemple un « niveau » discret de distance pour limiter la quantité d'informations, ou bien une version normalisée, voire légèrement bruitée de la distance). Dans la suite de la présente description, on parlera de manière générique de « score de distance », lequel pourra par exemple être à valeur entre 0 données personnelles totalement différentes) et 100 (données personnelles totalement identiques).

Dans le cas d'une identification, le module matériel de sécurité 10 peut renvoyer par exemple le booléen selon si le seuil est dépassé pour au moins une donnée de référence, les différents taux de similarité/scores associés à chaque donnée de référence en particulier ceux supérieurs au seuil, ou les identifiants de la ou les données de référence pour lesquels le taux de similarité dépasse ledit seuil, et à nouveau tout autre score possible.

Pour d'autres types de données personnelles, par exemple alphanumériques, la donnée de référence et la donnée candidate doivent être identiques, de sorte qu'on peut renvoyer directement un booléen indiquant si c'est le cas.

De manière générale, n'importe quelles données représentatives du résultat de la comparaison pourront être utilisées comme données de sortie du module matériel de sécurité 10, tant que les données personnelles restent inaccessibles.

### Chiffrement homomorphe

Il peut sembler paradoxal que le module matériel de sécurité 10 soit le seul à disposer de la clé privée de déchiffrement des données personnelles de référence mais n'ait pas le droit d'accepter les données personnelles de référence chiffrées, mais on utilise en fait ici astucieusement les propriétés du chiffrement homomorphe.

L'idée est d'utiliser le simple module de traitement de données 11 pour mettre en œuvre directement dans le domaine chiffré ladite comparaison entre l'au moins une donnée personnelle de référence et la donnée personnelle candidate. En d'autres termes, le module de traitement de données 11 travaille sur des données chiffrées et obtient un résultat (typiquement un score de distance entre la donnée personnelle de référence et la donnée personnelle candidate) lui-même chiffré et donc inexploitable.

On rappelle que c'est en effet une propriété du chiffrement homomorphe que de pouvoir « commuter » avec certaines opérations, par exemple addition et multiplication dans le cas d'une chiffrement totalement homomorphe (FHE), ce qui permet par exemple de mettre en œuvre un produit scalaire, i.e. un calcul de distance.

Ledit module matériel de sécurité 10 est quant à lui configuré pour déchiffrer le résultat de ladite comparaison en utilisant ladite clé privée de déchiffrement, ce qui est conforme au filtrage, puis la traiter de sorte à obtenir une autre donnée représentative du résultat de ladite comparaison, typiquement par normalisation et/ou comparaison avec un seuil. De manière générale, cette donnée représentative du résultat de ladite comparaison est un résultat d'identification/authentification de l'individu, i.e. typiquement un booléen d'appartenance à la base ou au moins un score de distance, en particulier ceux supérieurs audit seuil. Ce mode de réalisation permet d'éviter au module matériel de sécurité 10 toute manipulation des données personnelles, et est très léger en termes calculatoire pour le module matériel de sécurité 10, puisque c'est le module classique 11 qui fait le gros du travail.

A noter que ladite donnée personnelle candidate doit être chiffrée de la même manière (homomorphe) que la ou les données personnelles de référence pour pouvoir mettre en œuvre la comparaison dans le domaine chiffré.

Ainsi ledit module de traitement de données 11 (ou les moyens de traitement d'acquisition biométrique 14 s'ils en ont la capacité) est avantageusement en outre configuré pour chiffrer ladite donnée personnelle candidate en utilisant une clé publique de chiffrement (correspondant à la clé privée de déchiffrement).

A noter que ladite donnée représentative du résultat de la comparaison peut être directement ce résultat de la comparaison (le score de distance), et le module matériel de sécurité 10 peut simplement le renvoyer, mais comme expliqué on a préférentiellement d'autres traitements mis en œuvre sur cette donnée par le module 10, comme par exemple sa normalisation et/ou sa comparaison avec un seuil, et/ou la combinaison des score de distance associés à plusieurs données de référence pour « masquer » le résultat de la comparaison si ces traitements ne sont pas déjà faits dans le module de traitement 11.

### Procédé de traitement de données personnelles

On comprendra que selon un deuxième aspect l'invention concerne de manière générale tout procédé de traitement de données personnelles mis en œuvre par ledit système de traitement de données personnelles 1 selon le premier aspect de l'invention. Il suffit que le module matériel de sécurité 10 puisse renvoyer (en clair) le résultat de ladite comparaison.

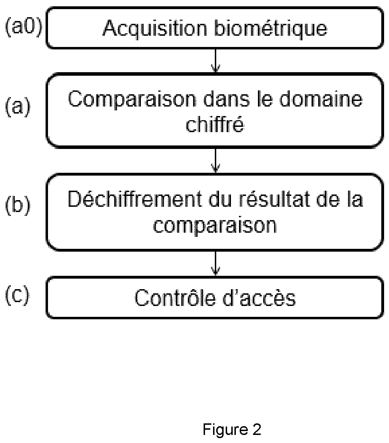

En référence à la figure 2, ledit procédé de traitement de données personnelles commence avantageusement, si les données personnelles sont des données biométriques, par une étape (a0) préalable d'obtention de la donnée biométrique candidate à partir d'un trait biométrique en utilisant les moyens d'acquisition biométrique 14 du système 1.

Ensuite, dans une étape (a), le procédé comprend la comparaison dans le domaine chiffré par ledit module de traitement de données 11 d'une donnée personnelle candidate avec au moins une donnée personnelle de référence (ledit résultat de ladite comparaison étant typiquement un score de distance entre la donnée personnelle candidate et chaque donnée personnelle de référence).

Le procédé comprend alors dans une étape (b), le déchiffrement dudit résultat de ladite comparaison par ledit module matériel de sécurité 10 en utilisant ladite clé privée de déchiffrement, et préférentiellement son traitement de sorte à générer une donnée descriptive du résultat de la comparaison entre l'au moins une donnée personnelle de référence et la donnée personnelle candidate (résultat d'identification/authentification de l'individu), telle qu'un booléen d'appartenance à la base ou bien les scores supérieurs à un seuil si les résultats des comparaisons sont des scores de distances. Comme expliqué cette étape (b) comprend typiquement la normalisation et/ou le seuillage d'un résultat de comparaison déchiffré (un score de distance) par le module matériel de sécurité 10 de sorte à générer ladite donnée descriptive du résultat de la comparaison.

Également, le procédé comprend avantageusement en outre une étape (c) de mise en œuvre d'un contrôle d'accès en fonction de ladite donnée représentative du résultat de ladite comparaison. En d'autres termes, si l'individu auquel appartient la donnée personnelle candidate a été correctement identifié/authentifié, il est « autorisé » et d'autres actions comme l'ouverture de la porte automatique P peuvent survenir.

### Produit programme d'ordinateur

Selon un troisième et un quatrième aspects, l'invention concerne un produit programme d'ordinateur comprenant des instructions de code pour l'exécution (en particulier sur le module traitement de données 11 et/ou le module matériel de sécurité 10 du système 1) d'un procédé selon le deuxième aspect de l'invention, ainsi que des moyens de stockage lisibles par un équipement informatique (un module de stockage de données 12 du système 1 et/ou un espace mémoire du module matériel de sécurité 10) sur lequel on trouve ce produit programme d'ordinateur.

## Revendications

1. Système de traitement de données personnelles (1) comprenant un module de stockage de données (12) stockant une base de données personnelles de référence chiffrées de manière homomorphe, ledit système (1) étant **caractérisé en ce qu'**il comprend en outre un module matériel de sécurité (10) stockant une clé privée de déchiffrement desdites données personnelles de référence et configuré pour mettre en œuvre un filtrage de données interdisant toute sortie de données personnelles.

2. Système selon la revendication 1, dans lequel ledit filtrage est mis en œuvre sur les données d'entrée dudit module matériel de sécurité (10), et bloque toute donnée personnelle.

3. Système selon la revendication 2, dans lequel ledit module matériel de sécurité (10) est configuré pour déchiffrer les données d'entrée dudit module matériel de sécurité (10) en utilisant ladite clé privée de déchiffrement, puis mettre en œuvre le filtrage sur les données d'entrée déchiffrées.

4. Système selon la revendication 3, dans lequel ledit filtrage est mis en œuvre sur la base d'au moins un intervalle de valeurs de données d'entrée autorisées ou interdites, d'au moins un intervalle de tailles de données d'entrée autorisées ou interdites, et/ou d'au moins un format de données d'entrée autorisé ou interdit.

5. Système selon l'une des revendications 1 et 4, dans lequel ledit module matériel de sécurité (10) est en outre configuré pour retourner au moins une donnée représentative du résultat d'une comparaison entre au moins une donnée personnelle de référence de ladite base et une donnée personnelle candidate.

6. Système selon la revendication 5, dans laquelle lesdites données personnelles sont des données biométriques, le système comprenant en outre des moyens d'acquisition biométrique (14) pour l'obtention de ladite donnée biométrique candidate.

7. Système selon l'une des revendications 5 et 6, comprenant en outre un module de traitement de données (11) configuré pour mettre en œuvre dans le domaine chiffré ladite comparaison entre l'au moins une donnée personnelle de référence et la donnée personnelle candidate, ledit module matériel de sécurité (10) étant configuré pour déchiffrer le résultat de ladite comparaison en utilisant ladite clé privée de déchiffrement.

8. Système selon la revendication 7, dans lequel le résultat de ladite comparaison entre l'au moins une donnée personnelle de référence et la donnée personnelle candidate est un score de distance entre l'au moins une donnée personnelle de référence et la donnée personnelle candidate, en particulier leur produit scalaire ; la génération par ledit module matériel de sécurité (10) de ladite donnée représentative du résultat de la comparaison entre l'au moins une donnée personnelle de référence et une donnée personnelle candidate comprenant la normalisation et/ou le seuillage du dit score de distance.

9. Système selon l'une des revendications 5 à 8 dans lequel ladite donnée personnelle candidate est chiffrée de la même manière homomorphe que les données personnelles de référence.

10. Système selon l'une des revendications 1 à 9, dans lequel ledit module matériel de sécurité (10) est en outre configuré pour déclencher une alarme si ledit filtrage bloque une donnée et/ou si une donnée d'entrée est mal chiffrée.

11. Procédé de traitement de données personnelles mis en œuvre par un système (1) comprenant un module de traitement de données (11) et un module de stockage de données (12) stockant une base de données personnelles de référence chiffrées de manière homomorphe ;
**caractérisé en ce que** ledit système (1) comprend en outre un module matériel de sécurité (10) stockant une clé privée de déchiffrement desdites données personnelles de référence et configuré pour mettre en œuvre un filtrage de données interdisant toute sortie de données personnelles ; et
**caractérisé en ce que** qu'il comprend des étapes de :
(a) Comparaison dans le domaine chiffré par ledit module de traitement de données (11) d'une donnée personnelle candidate avec au moins une donnée personnelle de référence ;
(b) Déchiffrement du résultat de ladite comparaison par ledit module matériel de sécurité (10) en utilisant ladite clé privée de déchiffrement.

12. Procédé selon la revendication 11, dans lequel lesdites données personnelles sont des données biométriques, le procédé comprenant une étape (a0) d'obtention de la donnée biométrique candidate à partir d'un trait biométrique en utilisant des moyens d'acquisition biométrique (14) du système (1).

13. Procédé selon l'une des revendications 11 et 12, comprenant en outre une étape (c) de mise en œuvre d'un contrôle d'accès en fonction d'une donnée représentative du résultat de ladite comparaison générée par ledit module matériel de sécurité (10) en fonction dudit résultat de la comparaison entre la donnée personnelle candidate et l'au moins une donnée personnelle de référence.

14. Produit programme d'ordinateur comprenant des instructions de code pour l'exécution d'un procédé selon l'une des revendications 11 à 13 de traitement de données personnelles, lorsque ledit procédé est exécuté sur un ordinateur.

15. Moyen de stockage lisible par un équipement informatique sur lequel un produit programme d'ordinateur comprend des instructions de code pour l'exécution d'un procédé selon l'une des revendications 11 à 13 de traitement de données personnelles.
